# EUROPEAN PATENT SPECIFICATION

(11) **EP 1 774 726 B1**
(45) Date of publication and mention of the grant of the patent: **21.08.2013**
(21) Application number: 05770072.6
(22) Date of filing: 08.07.2005
(51) Int. Cl.: H04L 12/66

(54) **PORT AGGREGATION ACROSS STACK OF DEVICES**
PORTAGGREGATION ÜBER EINEN STAPEL VON EINRICHTUNGEN HINWEG
GROUPEMENT DES ACCES DANS UN EMPILEMENT DE DISPOSITIFS

(30) Priority: 13.07.2004 US 890894
(43) Date of publication of application: 18.04.2007
(73) Proprietor: Intel Corporation, Santa Clara, CA 95052 (US)
(72) Inventor: SINGH, Hartej, San Jose, CA 95136 (US); NAVADA, Muraleedhara, Santa Clara, CA 95051 (US); GUERRERO, Miguel, Fremont, CA 94539 (US)
(74) Representative: Dunlop, Hugh Christopher
(86) International application number: PCT/US2005/024473
(87) International publication number: WO 2006/017209

(56) References cited:
- EP-A- 1 195 952
- US-A1- 2003 169 748
- US-A1- 2004 105 440

## Description

### BACKGROUND

Network switches, routers, and the like are used to distribute information through networks by sending the information in segments such as packets. A packet typically includes a "header" that stores a destination address for routing the packet and a "payload" that stores a portion of the information sent through the network. To forward the packet to an intended destination, some networks include a group of routers that appear to network devices as a single large router, known as a stack. By grouping the routers to produce a stack, various administrative functions and operational rules are shared among the routers in the stack.

US2003/169748A1 and EP1195952A disclose the features of the preamble of the independent claims.

### SUMMARY OF INVENTION

The present invention is defined by the features of the independent claims. Preferred advantageous embodiments thereof are defined by the dependent claims.

### DESCRIPTION OF DRAWINGS

FIG. 1 is a block diagram depicting a system for forwarding packets.
FIG. 2A is a block diagram depicting a stack of routers.
FIG. 2B is a block diagram depicting a router. FIG. 2C shows a device vector.
FIG. 3 shows a forwarding address table.
FIG. 4 shows a port aggregation table.
FIG. 5 shows stack device tables.
FIG. 6 shows device aggregation tables.

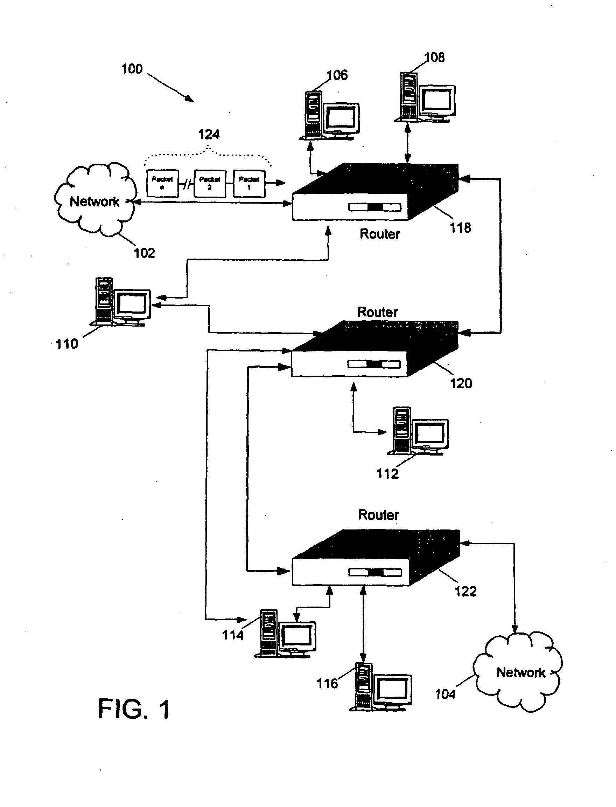

Referring to FIG. 1, a system 100 for transmitting packets between networks 102, 104 (e.g., local area networks (LANs), wide area networks (WANs), the Internet, etc.) and computer systems 106-116 includes three routers 118, 120, 122 that are connected to produce a stack of routers. In this arrangement the routers 118-122 are used to produce a stack and to deliver packets, however in other arrangements the system 100 includes a stack of network switches, hubs, or other packet forwarding devices. Furthermore, the stack may include a combination of different types of packet forwarding devices. For example, a stack produced with a combination of network switches and/or routers may be included in system 100.

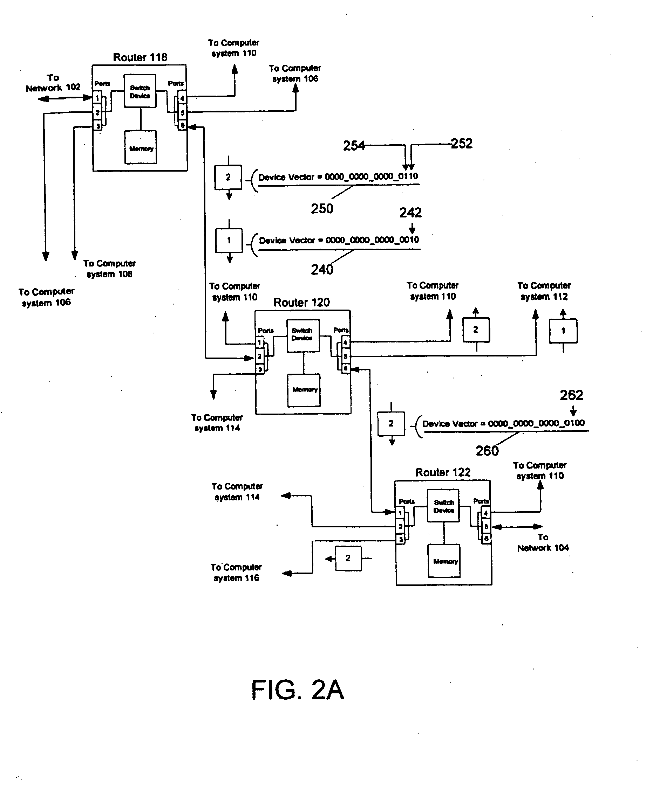

Referring also to FIG. 2A, each computer system can be connected to a router by a physical link. Generally, a particular link between a router and a computer system has a bandwidth limited by the capabilities of the router, and more particularly the characteristics of a relevant port. To increase the bandwidth between the stack and the computer system, ports of one or more routers are aggregated such that its corresponding physical links appear as a single logical link. For example, ports 2 and 5 of router 118 can be aggregated to increase the bandwidth between router 118 and computer system 106. In another example port 4 of router 118, port 1 of router 120, and port 4 of router 120 are aggregated to increase the bandwidth between the stack and the computer system 110. In other examples, the bandwidth of a logical link between two networks (e.g., networks 102, 104) is scaled through the selection of multiple ports

In one example, a stream of packets 124 is received by the stack through router 118 from network 102. Once received, the individual packets included in packet stream 124 are delivered to their intended destination(s) as determined based on header data of each respective packet. For example, the header of packet_1 includes data representing that the packet is destined for computer system 112. Similarly, packet_2 includes a header, however, this packet is intended for delivery to computer systems 110 and 116. In another example, one or more of the packets included in the packet stream 124 are destined for network 104 for delivery to one or more computer systems or other types of destinations (e.g., servers, personal digital assistants (PDAs), cellular phones, etc.).

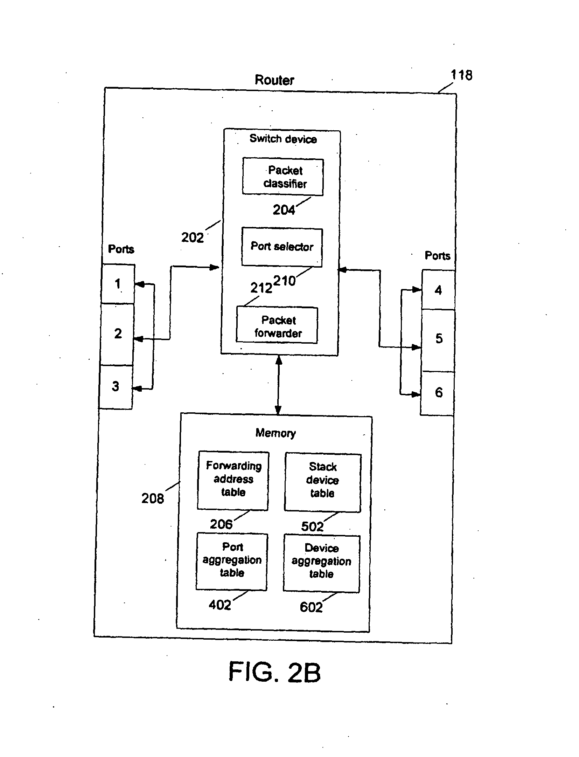

Referring to FIGS. 2A and 2B, to transfer packets among the computer systems and the networks, based on their intended destination(s), packets are passed among the routers in the stack. For example, to deliver packet_2 to computer system 116, the packet is passed from router 118 to router 120 and to router 122. Packet_2 exits the stack by being delivered from router 122 to computer system 116.

As packets are received by a router (e.g., router 118), the packets are passed to a switch device (e.g., switch device 202), which determines the intended destination of the packets and the appropriate port(s) to send each packet using one or more tables (e.g., a forwarding address table, and a port aggregation table) stored in a memory local to the router. The tables (described in more detail below) in each router contain identical information across the stack. In other words, a forwarding address table in router 118 contains the same information as a forwarding address table in router 120 or router 122.

A packet classifier 204 is executed by the switch device 202 to determine the destination of a packet if the packet is received from a device (e.g., network 102, computer system 106, etc.) external to the stack. To determine a packet destination, packet classifier 204 accesses data stored in the header of the packet and compares the data in the header to data stored in a forwarding address table 206 that is stored in a memory 208 (e.g., random access memory (RAM), static RAM (SRAM), dynamic RAM (DRAM), read-only memory (ROM), etc.) included in router 118.

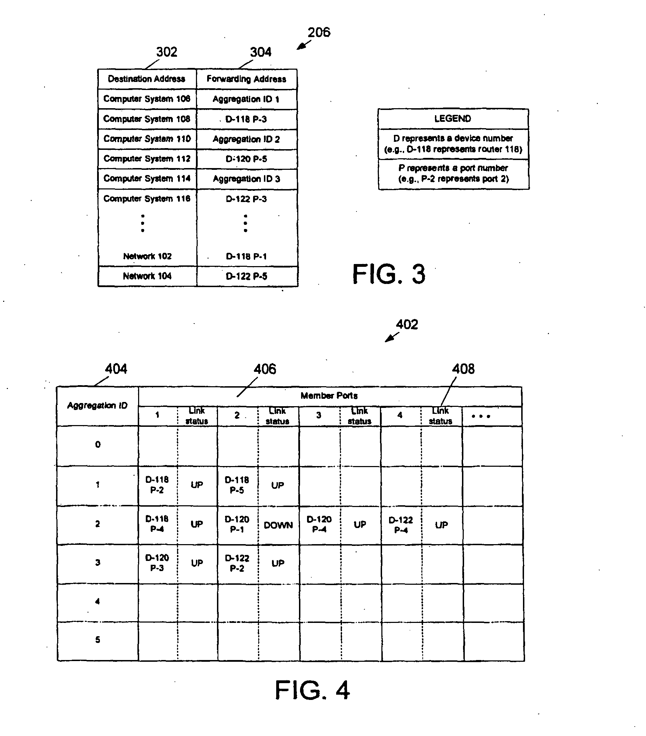

Referring to FIG. 3, details of the forwarding address table 206 are shown. The forwarding address table 206 includes data for matching destination addresses 302 (e.g., computer system 108, computer system 110) with a forwarding address 304 designated by a port number and a device number (e.g., port 3 of router 118), or alternatively, an aggregation identifier (e.g., aggregation ID 2).

If the comparison indicates that the packet is destined for a computer system connected to the router in which the packet classifier 204 is executed by a single port (e.g., computer system 108 connected to port 3 of router 118), the switch device 202 passes the packet directly to the port.

If the comparison made by the packet classifier 204 indicates that the packet is destined for a computer system connected to a different router in the stack by a single port (e.g., computer system 116 connected to port 3 of router 122), the packet classifier 204 produces and inserts a device vector into the header of the packet (described in more detail below). Each router uses the device vector to determine the appropriate router to use to efficiently send the packet through the stack. By inserting a device vector in each packet that enters the stack, packet processing time is reduced since each router does not need to individually determine the destination(s) of each packet being passed about the stack. By reducing processing time, conserved clock cycles can be used for other processing operations of the routers.

If the comparison made by the packet classifier 204 indicates that the packet is destined for a computer system connected to one or more routers in the stack by a logical link represented by an aggregation ID (e.g., computer system 110 connected to the stack by a logical link represented by aggregation ID 2), the packet classifier 204 retrieves an aggregation entry from a port aggregation table 402 using the aggregation ID.

Referring to FIG. 4, a port aggregation table 402 is shown. Each entry of the port aggregation table 402 includes an aggregation ID 404 (e.g., aggregation ID 2) and a set of ports 406 (e.g., port 4 of router 118, ports 1, and 4 of router 120, and port 4 of router 122; collectively "member ports") associated with to the aggregation ID 404. In one implementation, a link status 408 associated with a member port 406 is provided in the port aggregation table 402. The link status 408 indicates whether a physical link is "UP" or "DOWN".

A port selector 210 executed by the switch device 202 selects one of the member ports 406 of the retrieved aggregation entry to direct the packet to. In one implementation, the port selector 210 uses a load-balancing algorithm that depends on the system requirements and implementations to distribute egress traffic among the member ports 406 of an aggregation entry. For example, the load-balancing algorithm balances the traffic on the member ports 406 using hardware-based hashing with hash parameters derived from the header fields of the packet. In another example, the load-balancing algorithm explicitly controls the forwarding to the member ports 406 through a member port forwarding table that is configured by protocol software. Since the aggregation entries in the port aggregation table are identical across the stack, performance of the load-balancing algorithm on any aggregation entry will result in the same member port selection regardless of which router's port selector is performing the load balancing. That is, if the port selector in router 118 selects port 4 of router 120 to direct a packet to, the port selector in router 120 will also select port 4 of router 120 to direct the packet to.

If a port selected by the port selector 210 is connected to the router in which the packet classifier 204 is executed (e.g., port 4 of router 118), the switch device 202 passes the packet directly to the port. If a port selected by the port selector 210 is in a different router in the stack (e.g., port 4 of router 120), the packet classifier 204 produces and inserts a device vector into the header of the packet. The device vector identifies the router having the selected port and is used by each router to determine the appropriate router to efficiently send the packet to through the stack. The packet classifier sends the packet to a packet forwarder 212.

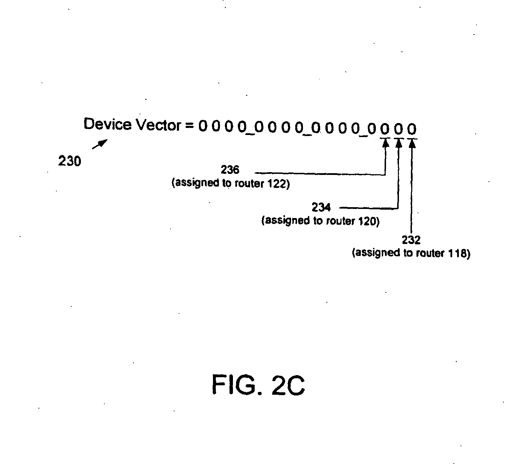

Referring to FIGS. 2A, 2B and 2C, each of the routers 118-122 in the stack includes six ports (e.g., ports 1-6) that allow bi-directional packet transferring among the routers. For example, port 6 in router 118 connects to port 2 in router 120. Similarly, port 6 in router 120 connects to port 1 in router 122 for transferring packets in either direction. Also, particular ports in the routers 118-122 respectively connect to computer systems 106-116 and the networks 12, 14. For example, ports 2 and 5 in router 118 connects to computer system 106, port 3 in router 118 connects to computer system 108, and ports 1 and 4 in router 120 and port 4 in router 118 connect to computer system 110. Similarly, port 1 in router 118 connects to network 102 for bi-directional packet transfer. In this particular example, each router 118-32 includes six ports for transferring packets. However, in other arrangements each of the routers 118-122 includes more than six ports (e.g., 24 ports, 48 ports, etc.) so that the port aggregate of the stack is larger (e.g., 72 ports, 144 ports, etc.) compared to the eighteen-port aggregate produced by the three six-port routers in the stack. Although, one or more of the routers 118-122 may include less than six ports. Also, while this stack includes three routers 118-122, in other arrangements, more or less routers or other types of packet forwarding devices are connected to produce a stack and deliver packets. In some arrangements the stack of packet forwarding devices is implemented on a smaller scale. For example, the stack of packet forwarding devices is implemented in a processor (e.g. a microprocessor, packet processor, etc.) or a group of processors.

Once a packet has entered the stack of routers 118-122, a device vector, such as device vector 230 of FIG. 2C, is inserted in the header of the packet to assist the packet being routed through the stack. The device vector 230 is an entry that includes data to identify which router or routers in the stack need to receive the packet. Typically the device vector 230 is inserted by the first router, or other type of packet forwarding device (e.g., network switch, hub, etc.) to first receive the packet in the stack. For example, since the packet stream 124 is received in the stack by router 118, router 118 inserts a device vector 230 into appropriate packets (e.g., packet_1, packet_2, etc.) included in the packet stream 124. Alternatively, if one or more packets are received by router 122 from the network 104, router 122 is the stack ingress point and inserts a device vector 230 into appropriate received packets.

Since the device vector is used for directing packets among the routers 118-122 included in the stack, the device vector is typically removed from the packet when the packet exits the stack of routers 118-122. Prior to a packet being passed to computer system 116 through port 3, router 122 removes the device vector 260 from the packet.

Each device vector includes data that identifies which router or routers need to receive the packet so that the packet is delivered to its intended destination outside the stack. Since the intended destination of packet_1 is computer system 112, the packet needs to be transferred from router 118 to router 120 for delivery to computer system 112. So, the device vector 240 inserted in packet_1 identifies port 5 of router 120. Similarly, since packet_2 is intended for computer systems 110 and 116, and port 4 of router 120 was selected by the port selector 210 using the load balancing algorithm, the device vector 250 inserted in packet_2 identifies both port 4 of router 120 and port 3 of router 122 to respectively deliver a copy of packet_2 to computer systems 110 and 116. In another example, if a packet is to be transferred from the stack to network 104, the device vector includes data that identifies router 122 since packets destined for network 104 are sent out of the stack by router 122.

The device vector 230 is inserted into a packet to identify the particular router or routers that need to receive a packet for delivery to one or more of the computer systems 106-116 or networks 102, 104. The device vector 230 includes a series of bits that are individually assigned to one of the routers 118-122 in the stack. For example, the device vector 230 includes sixteen bits, in groups of four, to represent sixteen routers or other packet forwarding devices included in the stack. Here, least significant bit 232 in device vector 230 indicates whether the associated packet needs to be sent to router 118 and bit 234 indicates whether the packet needs to be sent to router 120. Progressing through the bits, bit 236 represents if the packet needs to be sent to router 122. Since this example includes three routers, three bits 232-236 are needed to assign a bit to each router. However, since device vector 230 includes sixteen bits, the remaining thirteen bits can be used in other arrangements for assigning to additional packet forwarding devices included in the stack in system 100. Also, while device vector 230 includes sixteen bits for assigning to routers or other packet forwarding devices, in other arrangements the device vector 230 includes more or less bits.

In this example, router 118 inserts device vector 240 in packet_1 and device vector 250 in packet_2. Also, since packet_1 is intended for delivery to computer 112, bit 242 associated with router 120 is set to a logic "1" to identify that packet_1 is to be delivered to router 120. After identifying that bit 242 is set to logic "1", packet forwarder 212 accesses a stack device table 502 in memory 208 to determine the particular port or ports in router 118 to send the packet. In this example, switch device 202 uses stack device table 502 to determine that packet_1 be sent through port 6 for delivering the packet to router 120. Similarly, for packet_2, bit 252, which is associated with router 120 is also set to logic "1" to represent that packet_2 be sent to router 120 for delivering the packet to computer system 110. Furthermore, since packet_2 is intended for computer system 116, bit 254 in device vector 250 is set to logic "1" to identify that the packet needs to be sent to router 122. While a logic "1" is used to identify a router to receive a particular packet, alternatively, in other arrangements, logic states may be reversed such logic "0" is stored in an appropriate device vector bit to identify the particular router to receive a packet.

After receiving a packet with an inserted device vector, the recipient router uses the device vector bits to determine the next destination for the packet. Since bit 242 is the only device vector 240 bit set to a logic "1", the router 120 relatively quickly determines that packet_1 is intended for one of the devices (e.g., computer systems 110 and 112) connected to router 120. The switch device at router 120 determines the intended destination of packet_1 and the appropriate port to send the packet using one or more tables stored in a memory local to router 120 as described above. In this case, a comparison of the data stored in the header of packet_1 and the forwarding address table stored in router 120 indicates that packet_1 is destined for computer system 112 which is connected to port 5 of router 120. The switch device 202 passes packet_1 directly to port 5.

Similar to packet_1, device vector 250 inserted in packet_2 has bit 252, which is also associated with router 120, set to a logic "1". In this case, a comparison of the data stored in the header of packet_2 and the forwarding address table stored in router 120 indicates that packet_2 is destined for computer system 110 which is connected to multiple routers in the stack by a logical link represented by aggregation ID 2. A packet classifier in router 120 retrieves an aggregation entry from a port aggregation table using aggregation ID 2. A port selector in router 120 then uses a load-balancing algorithm to select one of the member ports of the retrieved aggregation entry to direct the packet to, and the switch device passes packet_2 to the selected member port, e.g., port 4.

Additionally, bit 254 associated with router 122 is also set to a logic level "1" to identify that packet_2 be sent to router 122. Typically, router 120 produces a copy of packet_2 for sending to router 122. Prior to sending the copy of packet_2, device vector 260 is inserted in the packet to identify that router 122 deliver the packet to a connected device (e.g., computer system 116, network 104, etc.) external to the stack. In this example, since packet_2 is intended for computer system 116, which is connected to router 122, bit 262 associated with router 122 is set to a logic "1".

Upon receiving the copy of packet_2, router 122 identifies that packet_2 is intended for delivery to computer system 116 by accessing header data in the packet. The switch device at router 122 determines the intended destination of packet_2 and the appropriate port to send the packet using one or more tables stored in a memory local to router 122 as described above. In this case, a comparison of the data stored in the header of packet_2 and the forwarding address table stored in router 122 indicates that packet_2 is destined for computer system 116 which is connected to port 3 of router 122. The switch device at router 122 passes the packet directly to port 3.

Device vector 260 includes data that is a subset of the data stored in device vector 250. In particular, device vector 250 has two bits 252, 254 set to logic "1" to identify routers 120 and 122, while device vector 260 only has bit 262 set to logic "1" since router 120 has delivered a copy of packet_2 to computer system 110.

Prior to sending packet_2 to computer system 116, router 120 removes device vector 260 from the packet. Similarly, prior to delivering packet_1 to computer system 112 and delivering packet_2 to computer system 110, device vectors 240 and 250 are respectively removed since the packets are exiting the stack. Also, since packets are typically not returned to stack devices from which they are sent, infinite packet circulation is avoided.

In this example, packets passed among the routers 118-122 in the stack are received from network 102 and are delivered to computer systems 110, 112, and 116, which are respectively connected to routers 120 and 122. However, in other examples, packets are received by the stack from network 104 or packets are delivered to network 104. Furthermore, packets may be passed in other directions, for example, packets may be sent to network 102 from port 1 of router 118.

The packet classifier 204, packet forwarder 212, and port selector 210 executed on switch device 202 are typically stored in the memory 208. However, in other arrangements the packet classifier 204, the packet forwarder 212, and the port selector 210 are stored in a storage device (e.g., a hard drive, CD-ROM, etc.) in communication with the switch device 202. Also, in this example memory 208 is presented separate from the switch device 202. However, in other arrangements memory 208 is included in the switch device 202.

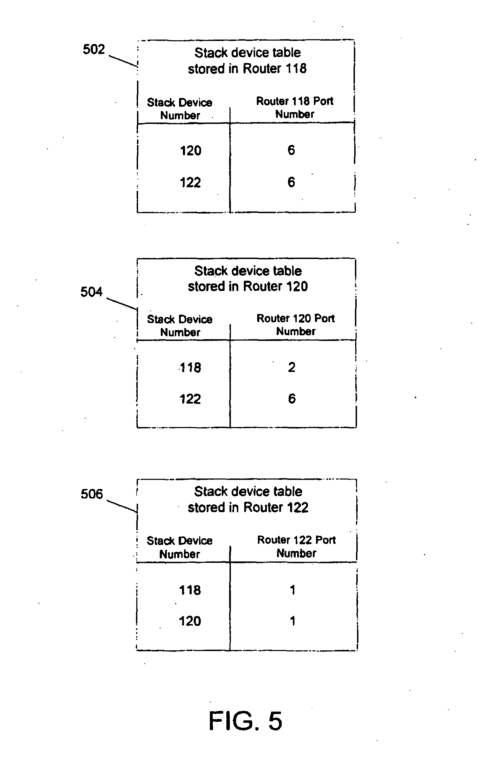

Referring to FIG. 5, stack device tables 502, 504, and 506 respectively stored in routers 118, 120, and 122 include data for matching a destination router to the particular port for sending a packet. For example, stack device table 502, which is stored in router 118, identifies the port of router 118 for sending packets to routers 30 and 32. Packets sent through port 6 in router 118 are delivered to router 120, and from router 120 are sent to router 122. Similarly, stack device table 504, which is stored in router 120, is used determine the particular port in router 120 to use to send packets to routers 118 and 122. In particular, packets are delivered to router 118 by sending the packets through port 2 and packets are delivered to router 122 by sending the packets through port 6 of router 120. Also, stack device table 506, which is stored in router 122, is used to determine the particular port in router 122 to use to send packets to routers 118 and 120. In particular, packets to be delivered to either router 118 or 120 are sent through port 1 of router 122.

By accessing a device vector inserted in a packet, the packet forwarder 212 executed in the recipient router determines which bits are set to logic "1" and then uses the stack device table 502 stored in the router to determine the particular port or ports to send the packet or copies of the packet. For example, when router 118 receives packet_1, packet forwarder 212 accesses stack device table 502 and determines that packet_1 is to be placed on port 1 for sending to router 120. Typically, each of the stack device tables 502-506 are respectively stored in memory included in each router such as stack device table 502 is stored in memory 208 of router 118. However, in some arrangements the stack device tables 502-506 are stored in one or more storage devices (e.g., hard drives, CD-ROMs, etc.) that are in communication with the respective routers 118-122.

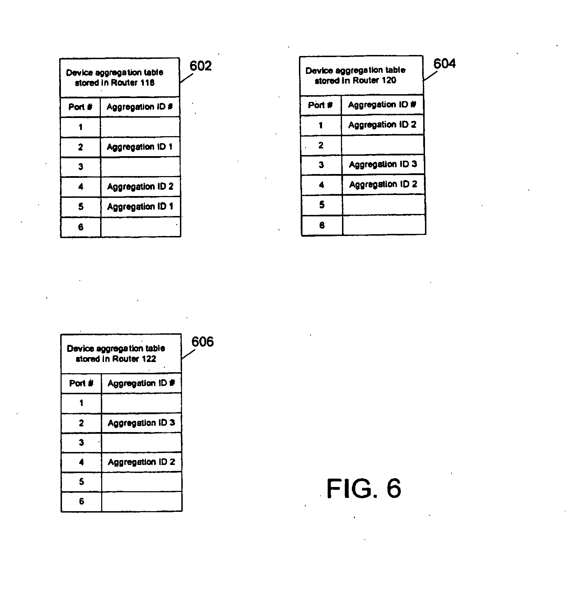

Referring to FIG. 6, device aggregation tables 602, 604, and 606 respectively stored in routers 118, 120, and 122 include data for matching a port with an aggregation ID. For example, device aggregation table 602, which is stored in router 118, identifies port 4 as being assigned to aggregation ID 2 and port 5 as being assigned to aggregation ID 3. Similarly, device aggregation table 604, which is stored in router 120, identifies ports 1, and 4 as being assigned to aggregation ID 2. Also, device aggregation table 606, which is stored in router 122, identifies port 4 as being assigned to aggregation ID 2 and port 6 as being assigned to aggregation ID 3.

Table agents executed by the switch devices (e.g., switch device 202 of router 118) maintain and update the port aggregation table and the device aggregation table stored in each router. For example, ports may be added to or removed from the set of ports assigned to a particular aggregation ID. Any modification that is made in one device aggregation table is propagated through the stack and reflected in the port aggregation table and the device aggregation table in all of the routers.

Other embodiments are within the scope of the following claims. The following are examples for illustration only and not to limit the alternatives in any way. The techniques described herein can be performed in a different order and still achieve desirable results.

## Claims

1. A method comprising:
receiving a packet at a first packet forwarding device in a stack of packet forwarding devices;
providing a port aggregation table (402) having a plurality of entries, wherein at least one entry identifies a plurality of ports associated with at least two packet forwarding devices in the stack;
using the packet and the port aggregation table (402) to select a port of a second packet forwarding device in the stack for sending the packet to a device external to the stack; **characterised by**
inserting a vector in the packet that identifies the second packet forwarding device in the stack; and
using the vector and a stack device table (502) to determine a port of the first packet forwarding device in the stack for sending the packet to the second packet forwarding device in the stack.

2. The method of claim 1, further comprising:
performing a load balancing operation using the packet and the port aggregation table (402) to select the port of a packet forwarding device in the stack.

3. The method of claim 1, wherein the selected port is a port of the first packet forwarding device in the stack.

4. The method of claim 1, wherein the vector includes a bit identifying the second packet forwarding device in the stack.

5. The method of claim 1, wherein the first packet forwarding device includes a router.

6. A computer program product, tangibly embodied in an information carrier, the computer program product being operable to cause a machine to perform the steps of a method in accordance with any one of claims 1 to 5.

7. A switch device (202) in a first packet forwarding device (118) in a stack of packet forwarding devices (118, 120, 122), the switch device capable of
receiving a packet,
providing a port aggregation table (402) having a plurality of entries, wherein at least one entry identifies a plurality of ports associated with at least two packet forwarding devices in the stack; and
using the packet and the port aggregation table to select a port of a second packet forwarding device (120) in the stack for sending the packet to a device (116, 104) external to the stack; **characterised in that** the switch device is further capable of:
inserting a vector (250) in the packet that identifies the second packet forwarding device in the stack; and
using the vector and a stack device table (502) to determine a port of the first packet forwarding device in the stack for sending the packet to the second packet forwarding device in the stack.

8. The switch device of claim 7 wherein the switch device is further capable of:
performing a load balancing operation using the packet and the port aggregation table to select the port of a packet forwarding device in the stack.

9. A packet forwarding device (118) in a stack of packet forwarding devices (118, 120, 122), the device comprising:
an input port to receive a packet;
one or more output ports to deliver the received packet;
a port aggregation table (402) having a plurality of entries, wherein at least one entry identifies a plurality of ports associated with at least two packet forwarding devices in the stack; and
a switch device (202) capable of
receiving a packet, and
using the packet and the port aggregation table to select a port of a second packet forwarding device (120) in the stack for sending the packet to a device external to the stack (116, 104); **characterised in that** the switch device is further capable of:
inserting a vector (250) in the packet that identifies the second packet forwarding device (120) in the stack; and
using the vector and a stack device table (502) to determine a port of the first packet forwarding device in the stack for sending the packet to the second packet forwarding device in the stack.

10. The packet forwarding device of claim 9 wherein the switch device is further capable of:
performing a load balancing operation using the packet and the port aggregation table to select the port of a packet forwarding device in the stack.

## Patentansprüche

1. Verfahren, aufweisend:
Empfangen eines Pakets von einer ersten Paketbe-förderungseinrichtung in einem Stapel von Paketbe-förderungseinrichtungen;
Bereitstellen einer mehrere Einträge aufweisenden Portaggregationstabelle (402), wobei mindestens ein Eintrag mehrere, mindestens zwei Paketbeförderungseinrichtungen im Stapel zugeordnete Ports identifiziert;
Anwenden des Pakets und der Portaggregationstabelle (402) zum Auswählen eines Ports einer zweiten Paketbe-förderungseinrichtung im Stapel zum Senden des Pakets an eine Einrichtung außerhalb des Stapels; gekenn-zeichnet durch
Einfügen eines Vektors in dem Paket, das die zweite Paketbeförderungseinrichtung im Stapel identifiziert; und
Anwenden des Vektors und einer Stapeleinrichtungs-tabelle (502) zur Bestimmung eines Ports der ersten Paketbeförderungseinrichtung im Stapel zum Senden des Pakets an die zweite Paketbeförderungseinrichtung im Stapel.

2. Verfahren nach Anspruch 1, ferner aufweisend:
Durchführen eines Lastverteilungsvorgangs unter An-wendung des Pakets und der Portaggregationstabelle (402) zum Auswählen des Ports einer Paketbeförderungseinrichtung im Stapel.

3. Verfahren nach Anspruch 1, wobei der ausgewählte Port ein Port der ersten Paketbeförderungseinrichtung im Stapel ist.

4. Verfahren nach Anspruch 1, wobei der Vektor ein Bit-Identifizieren der zweiten Paketbeförderungseinrichtung im Stapel aufweist.

5. Verfahren nach Anspruch 1, wobei die erste Paketbe-förderungseinrichtung einen Router aufweist.

6. Rechner-Programm-Produkt, das physisch auf einem Informationsträger wahrnehmbar ist, wobei das RechnerProgramm-Produkt betreibbar ist, um zu bewirken, dass eine Maschine die Schritte eines Verfahrens nach einem der Ansprüche 1 bis 5 ausführt.

7. Schaltereinrichtung (202) in einer ersten Paketbe-förderungseinrichtung (118) in einem Stapel von Paket-beförderungseinrichtungen (118, 120, 122), wobei die Schaltereinrichtung die Fähigkeit aufweist für
Empfangen eines Pakets,
Bereitstellen einer mehrere Einträge aufweisenden Portaggregationstabelle (402), wobei mindestens ein Eintrag mehrere, mindestens zwei Paketbeförderungseinrichtungen im Stapel zugeordnete Ports identifiziert; und
Anwenden des Pakets und der Portaggregationstabelle zum Auswählen eines Ports einer zweiten Paketbeförderungseinrichtung (120) im Stapel zum Senden des Pakets an eine Einrichtung (116, 104) außerhalb des Stapels; **gekennzeichnet dadurch, dass** die Schaltereinrichtung ferner folgende Fähigkeit aufweist:
Einfügen eines Vektors (250) in dem Paket, das die zweite Paketbeförderungseinrichtung im Stapel identifiziert; und
Anwenden des Vektors und einer Stapeleinrichtungstabelle (502) zur Bestimmung eines Ports der ersten Paketbeförderungseinrichtung im Stapel zum Senden des Pakets an die zweite Paketbeförderungseinrichtung im Stapel.

8. Schaltereinrichtung nach Anspruch 7, wobei die Schaltereinrichtung ferner folgende Fähigkeit aufweist:
Durchführen eines Lastverteilungsvorgangs unter Anwendung des Pakets und der Portaggregationstabelle zum Auswählen des Ports einer Paketbeförderungseinrichtung im Stapel.

9. Paketbeförderungseinrichtung (118) in einem Stapel von Paketbeförderungseinrichtungen (118, 120, 122) wobei die Einrichtung Folgendes aufweist;
einen Eingabeport zum Empfangen eines Paket;
einen oder mehrere Ausgabeports zum Liefern des empfangenen Pakets;
eine Portaggregationstabelle (402), aufweisend mehrere Einträge, wobei mindestens ein Eintrag mehrere, mindestens zwei Paketbeförderungseinrichtungen im Stapel zugeordnete Ports identifiziert; und
eine Schaltereinrichtung (202), aufweisend die Fähigkeit zum
Empfangen eines Pakets, und
Anwenden des Pakets und der Portaggregationstabelle zum Auswählen eines Ports einer zweiten Paketbeförderungseinrichtung (120) im Stapel zum Senden des Pakets an eine Einrichtung außerhalb des Stapels (116, 104); **gekennzeichnet dadurch, dass** die Schaltereinrichtung ferner folgende Fähigkeit aufweist:
Einfügen eines Vektors (250) in dem Paket, das die zweite Paketbeförderungseinrichtung im Stapel identifiziert; und
Anwenden des Vektors und einer Stapeleinrichtungstabelle (502) zur Bestimmung eines Ports der ersten Paketbeförderungseinrichtung im Stapel zum Senden des Pakets an die zweite Paketbeförderungseinrichtung im Stapel.

10. Paketbeförderungseinrichtung nach Anspruch 9, wobei die Schaltereinrichtung ferner die Fähigkeit aufweist für:
Durchführen eines Lastverteilungsvorgangs unter Anwendung des Pakets und der Portaggregationstabelle zum Auswählen des Ports einer Paketbeförderungseinrichtung im Stapel.

## Revendications

1. Procédé comprenant :
la réception d'un paquet au niveau d'un premier dispositif d'acheminement de paquet dans un empilement de dispositifs d'acheminement de paquet ;
la fourniture d'une table d'agrégation de port (402) ayant une pluralité d'entrées, dans lequel au moins une entrée identifie une pluralité de ports associés à au moins deux dispositifs d'acheminement de paquet dans l'empilement ;
l'utilisation du paquet et de la table d'agrégation de port (402) pour sélectionner un port d'un second dispositif d'acheminement de paquet dans l'empilement pour envoyer le paquet à un dispositif externe à l'empilement ; **caractérisé par** l'insertion d'un vecteur dans le paquet qui identifie le second dispositif d'acheminement de paquet dans l'empilement; et
l'utilisation du vecteur et d'une table de dispositif d'empilement (502) pour déterminer un port du premier dispositif d'acheminement de paquet dans l'empilement pour envoyer le paquet au second dispositif d'acheminement de paquet dans l'empilement.

2. Procédé selon la revendication 1, comprenant en outre :
la réalisation d'une opération d'équilibrage de charge en utilisant le paquet et la table d'agrégation de port (402) pour sélectionner le port d'un dispositif d'acheminement de paquet dans l'empilement.

3. Procédé selon la revendication 1, dans lequel le port sélectionné est un port du premier dispositif d'acheminement de paquet dans l'empilement.

4. Procédé selon la revendication 1, dans lequel le port inclut un bit identifiant le second dispositif d'acheminement de paquet dans l'empilement.

5. Procédé selon la revendication 1, dans lequel le premier dispositif d'acheminement de paquet inclut un routeur.

6. Produit de programme informatique, intégré tangiblement dans un support d'informations, le produit de programme informatique étant opérationnel pour amener une machine à réaliser les étapes d'un procédé en conformité avec l'une quelconque des revendications 1 à 5.

7. Dispositif de commutateur (202) dans un premier dispositif d'acheminement de paquet (118) dans un empilement de dispositifs d'acheminement de paquet (118, 120, 122), le dispositif de commutateur étant capable de
recevoir un paquet,
fournir une table d'agrégation de port (402) ayant une pluralité d'entrées, dans lequel au moins une entrée identifie une pluralité de ports associés à au moins deux dispositifs d'acheminement de paquet dans l'empilement ; et
utiliser le paquet et la table d'agrégation de port pour sélectionner un port d'un second dispositif d'acheminement de paquet (120) dans l'empilement pour envoyer le paquet à un dispositif (116, 104) externe à l'empilement; **caractérisé en ce que** le dispositif de commutateur est en outre capable de :
insérer un vecteur (250) dans le paquet qui identifie le second dispositif d'acheminement de paquet dans l'empilement ; et
utiliser le vecteur et une table de dispositif d'empilement (502) pour déterminer un port du premier dispositif d'acheminement de paquet dans l'empilement pour envoyer le paquet au second dispositif d'acheminement de paquet dans l'empilement.

8. Dispositif de commutateur selon la revendication 7, dans lequel le dispositif de commutateur est en outre capable de :
réaliser une opération d'équilibrage de charge en utilisant le paquet et la table d'agrégation de port pour sélectionner le port d'un dispositif d'acheminement de paquet dans l'empilement.

9. Dispositif d'acheminement de paquet (118) dans un empilement de dispositifs d'acheminement de paquet (118, 120, 122), le dispositif comprenant :
un port d'entrée pour recevoir un paquet ;
un ou plusieurs ports de sortie pour délivrer le paquet reçu ;
une table d'agrégation de port (402) ayant une pluralité d'entrées, dans lequel au moins une entrée identifie une pluralité de ports associés à au moins deux dispositifs d'acheminement de paquet dans l'empilement ; et
un dispositif de commutateur (202) capable de :
recevoir un paquet, et
utiliser le paquet et la table d'agrégation de port pour sélectionner un port d'un second dispositif d'acheminement de paquet (120) dans l'empilement pour envoyer le paquet à un dispositif externe à l'empilement (116, 104) ; **caractérisé en ce que** le dispositif de commutateur est en outre capable de :
insérer un vecteur (250) dans le paquet qui identifie le second dispositif d'acheminement de paquet (120) dans l'empilement ; et
utiliser le vecteur et une table de dispositif d'empilement (502) pour déterminer un port du premier dispositif d'acheminement de paquet dans l'empilement pour envoyer le paquet au second dispositif d'acheminement de paquet dans l'empilement.

10. Dispositif d'acheminement de paquet selon la revendication 9, dans lequel le dispositif de commutateur est en outre capable de :
réaliser une opération d'équilibrage de charge en utilisant le paquet et la table d'agrégation de port pour sélectionner le port d'un dispositif d'acheminement de paquet dans l'empilement.
